# EUROPEAN PATENT SPECIFICATION

(11) **EP 2 304 306 B1**
(45) Date of publication and mention of the grant of the patent: **01.08.2018**
(21) Application number: 09728264.4
(22) Date of filing: 31.03.2009
(51) Int. Cl.: F16L 55/164, E21B 33/13

(54) **METHOD FOR IN-SITU REPAIR OF A HOLE IN PIPE IN PIPE TUBULARS**
VERFAHREN ZUR IN-SITU-REPARATUR EINES ROHRLOCHS IN ROHRLEITUNGEN
RÉPARATION IN SITU D'UN TROU DANS UNE CONDUITE DE TUBULURES À CONDUITE

(30) Priority: 31.03.2008 DK 200800468; 31.03.2008 US 40913 P
(43) Date of publication of application: 06.04.2011
(73) Proprietor: Maersk Olie & Gas A/S, 1263 Copenhagen K (DK)
(72) Inventor: DEAN, Claire, DK-1915 Frederiksberg (DK); HEIJNEN, Wilhelmus, Hubertus, Paulus, Maria, 55442 Stromberg (DE)
(74) Representative: Zacco Denmark A/S
(86) International application number: PCT/EP2009/053813
(87) International publication number: WO 2009/121882

(56) References cited:
- EP-A- 0 126 648
- EP-A- 0 496 289
- WO-A-2007/101444
- GB-A- 2 169 983

## Description

The current invention relates to a method for the in-situ repair of holes in well tubulars used in the production of hydrocarbons or fluids and/or the injection of fluids into earth formations. Three non-limiting examples of such uses are the production of oil, production of natural gas and the injection of water into a formation. The current invention also relates to a device used in said method.

In this specification, the term "pipe in pipe" is used to represent those well tubulars which are arranged inside another well tubular. One typical example is "production tubing" which is the well tubular used in the production of oil and which is inserted into a casing, a liner or the like. Production tubing differentiates itself from other forms of well tubulars in that it is usually designed to be removed and replaced if necessary, unlike casing which is usually cemented into the well bore and becomes an integral part of the well. The current specification uses production tubing as the main example of pipe in pipe tubulars. The protection of the current invention shall however not be limited to production tubing, but be extended to cover all forms of pipe in pipe tubulars.

A definition of "production tubing" is: "A wellbore tubular used to produce reservoir fluids. Production tubing is assembled with other completion components to make up the production string. The production tubing selected for any completion should be compatible with the wellbore geometry, reservoir production characteristics and the reservoir fluids."

A definition of "casing" is: "Large-diameter pipe lowered into an open hole and cemented in place. The well designer must design casing to withstand a variety of forces, such as collapse, burst, and tensile failure, as well as chemically aggressive brines. Casing is run to protect fresh-water formations, isolate a zone of lost returns or isolate formations with significantly different pressure gradients.

It should also be noted that the person skilled in the art will know that production tubing and casing are sometimes defined with respect to their diameter. Tubulars with a diameter of larger than 4.5" are sometimes defined as casing while tubulars with a diameter of less than 4.5" are defined as tubing. However, as will also be known to the person skilled in the art, in certain applications, tubulars with a diameter of more than 4.5" are used as production tubing. Therefore the purpose of the current specification, production tubing should be understood as that tubular which is inside a casing or liner, no matter what the size of the tubular.

### Description of related art

In the following, the examples and discussion will focus mainly on "production tubing". However, the person skilled in the art should understand that the current invention can be applied to all other forms of "pipe in pipe" tubulars.

Conventional techniques for repairing holes in pipe in pipe tubulars include the following five techniques.
1. Pulling the production tubing out & replacing the damaged portion
2. Installing a straddle over the damaged portion
3. Installing an expandable tubing patch over the damaged portion
4. Treatment of the damaged area with a pressure activated liquid sealant
5. Pumping cement down the production tubing and out through the damaged area

However, the currently available methods all suffer from drawbacks. For example, the first option, pulling the production tubing and replacing the damaged portion, involves high costs & complicated operational logistics.

The second option, installing a straddle, restricts the internal diameter of the production tubing after installation. The internal diameter of the straddle is typically only 1/3 to 1/2 of the internal diameter of the production tubing in which it is installed. This significantly reduces the amount of flow which can be pumped through the production tubing after the straddle has been installed.

The third option, installing an expandable tubing patch, typically results in less of an ID restriction than a straddle but many of the commercially available products suffer from one or more of the following problems: they are not proven gas tight, they are not available in sufficiently small sizes to patch holes in tubing, and they require either coiled tubing or drill pipe for deployment, restricting applicability & increasing cost.

The fourth option, using pressure activated sealants, is typically used on small leaks such as pinholes and leaking connections. Pressure activated sealants are designed to be pumped down into the production tubing and out through the leaks. A pressure drop through the leak site causes the sealant fluids to polymerize into a flexible solid. The polymerization process occurs only under differential pressure. The sealant is typically deployed by pumping the fluid down the leaking production tubing, or by using either coiled tubing or a wireline bailer. This technique has, however, not been extensively applied to larger holes and its success rate for this application is not expected to be high.

The fifth option is to use cement. However, materials such as cement do not have the appropriate physical properties to spread evenly into the annulus & seal off a tubular hole. It is therefore required to pump large quantities of cement in order to be sure that a hole is effectively sealed. This is both time consuming and expensive. The use of cement is also a more permanent solution since the cement will fill a large portion of the annulus between the production tubing and the casing, thereby making it near to impossible to remove the production tubing if desired.

It is to be noted that during the drafting of this specification, after the invention had been made, devices were found in the patent literature which are used in the reparation of sewer lines. See for example EP 0 496 289. We note that even though they might be similar in appearance to the devices discussed in the current specification, the devices used in sewer lines are not suitable for use in down the hole reparation of production tubing. Furthermore, the person who works daily with drilling operations would not have been inspired by the methods and tools used in the reparation of sewer pipes due to the differences in working environment and the difference in the demands made on the equipment. These devices should therefore not be used when discussing the patentability of the current invention.

We also note that the reparation of the production tubing of a well is quite different from the reparation of the casing of a well since the casing is permanently fixed in the well, whereas the production tubing is meant to be removable. The demands of the reparation are therefore quite different.

GB 2 169 983 discloses an apparatus for use in repairing a defect in a drain or pipeline comprising an ejector body of tubular configuration adapted to enable it to be drawn or pushed into a drain or pipeline to such a position that the leading end and the trailing end thereof are disposed respectively to one side and to the other side of the defect and there to be sealed relative to said drain or pipeline, ducts for conveying the components of a multi-component setting compound to the body to be mixed adjacent or within the latter prior to passing to ejector openings between the ends of the body.

EP 0 126 648 discloses a method for sealing joints and leaks in pipelines or mains by injecting into the joint or leak a sealant by means of an expandible tubular pig which is moved endwise through the pipeline or main. The pig forms within the pipeline or main an air-free space which communicates with the joint or leak and which is isolated from the fluid in the main. The sealant is injected into the joint or leak by way of the space so that the sealant cures in situ in the joint or leak.

WO 2007/101444 A2 discloses a system for injecting a substance into a space surrounding a well bore with an assembly to be inserted into a well tubular, the assembly comprising: a cutting part capable of making a hole through well tubular; a substance chamber for storage of said substance; a substance injecting part capable of injecting said substance into said space. The system has a cutting part having a chamber with a first end and a second end and having a wall surrounding said chamber and including at least one entrance for substance at said first end and including an exit for delivery through the well tubular and into the annular space at said second end.

EP 0 496 289 A1 discloses a device for localisation and sealing of leaks in pipework systems, especially in sewage pipes and at junction points between sewage pipes, having a packer which is provided with a plurality of volumes that can be inflated via air lines and with a device for the application of a sealing material. The volumes have an essentially crescent-shaped cross-section (seen at right angles to the longitudinal direction), the device for application of a sealing material being provided in the region of at least one central volume, the central volume or volumes in turn having their minimum cross-section (seen along the longitudinal direction) at this point, and the device being provided with a head which is essentially aligned with the outer wall of the packer.

### Summary of the invention

A first aspect of the current invention is to provide a method as mentioned in the introductory paragraph whereby one can repair holes in pipe in pipe tubulars in-situ, thereby avoiding the cost & operational logistics associated with pulling & replacing damaged pipe in pipe tubulars.

A second aspect of the current invention is to provide a method as mentioned in the introductory paragraph which is designed to minimize the amount which the repair reduces the inner diameter of the pipe in pipe tubulars.

A third aspect of the current invention is to provide a method as mentioned in the introductory paragraph which can be deployed on wireline.

A fourth aspect of the current invention is to provide a method as mentioned in the introductory paragraph which can provide a gas tight seal in typical production tubing sizes.

A fifth aspect of the current invention is to provide a method as mentioned in the introductory paragraph whereby the reparation created by the device is not dependent on differential pressure in order to solidify & develop mechanical strength.

A sixth aspect of the current invention is to provide a method as mentioned in the introductory paragraph whereby fluid flow can be maintained in the annulus between an inner pipe and an outer pipe after the reparation.

A seventh aspect of the current invention is to provide a method as mentioned in the introductory paragraph whereby the pipe in pipe tubing is strengthened in the area of the reparation.

The aspects mentioned above are solved in part by a method as mentioned in the introductory portion which comprises the steps of: running a hole sealing device into the pipe in pipe tubular, identifying the hole in the pipe in pipe tubular, and injecting a sealant material into the hole via the hole sealing device.

In this way, the sealing accumulates predominantly on the outside of the tubular being treated. The device and method of the invention thereby minimise the thickness of the layer that sets on the inside of the tubing, thereby resulting in minimum reduction in internal diameter. This minimizes any restriction to flow and enables future intervention activities to be carried out below the reparation.

In a first embodiment, the sealant material used could be a two component epoxy. By changing the mixture of the epoxy, the properties of the sealant material can be changed and adjusted to the needs of the particular situation.

The method could also comprise the step of rotating the hole sealing device in the pipe in pipe tubular until a sealant material injecting nozzle of the hole sealing device faces the hole in the pipe in pipe tubular. The method could also comprise the step of pressing the hole sealing device against the inner surface of the production tubing such that a seal is established around the hole. In this way, sealant is only applied to the inside surface of the pipe in pipe tubular locally at the location of the hole.

In order to strengthen the area around the hole, the step of injecting a sealant material into the hole, could inject just enough sealant material to partially fill the annulus between the production tubing and the casing.

In a preferred embodiment of the method, a thin foil or a non-stick material could be arranged between the inner surface of the production tubing and the device before the sealant material is injected into the hole. In this way, the hole sealing tool is prevented from sticking to the production tubing when the sealant hardens.

The invention also relates to a device which is suitable for a method as mentioned in the introductory paragraph. Such a device could comprise an elongated seal having a longitudinal axis which is parallel with the longitudinal axis of the production tubing and which is arranged to establish a seal around an area of the inner surface of the production tubing when the device is pressed against the inner surface of the production tubing. In this way, the device is arranged to focus the sealant material at the area of the hole. In addition, the seal created can strengthen the production tubing around the hole via the elongated patch which is formed.

The device could also be arranged such that it comprises means for holding a foil between the sealant and the device, such that sealant does not fasten the device to the inner surface of the production tubing.

In one embodiment of the device, the device could comprise a mechanism with a mechanical arm which is arranged to press the device against the inner surface of the production tubing opposite the mechanical arm. The mechanical arm can ensure that the seal is firmly pressed against the inner surface of the production tubing.

The device could also comprise a mechanism which comprises a threaded rod, a threaded nut arranged on the threaded rod and an arm attached to the threaded nut, where rotation of the threaded rod causes the arm attached to the threaded nut to extend from the housing. This is a simple way to generate a large mechanical force with small energy requirements and in an elongated device.

It should be emphasized that the term "comprises/comprising" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Figure 1 shows a perspective view of a portion of some production tubing having two holes through the side wall of the tubing, said production tubing being arranged inside a casing shown in section.
Figure 2 shows a schematic cross section view of a portion of the production tubing of figure 1 and well annulus, said section comprising a hole through the production tubing.
Figure 3 shows the cross section view of Figure 2 after the hole has been repaired using an embodiment of the method of the current invention.
Figure 4 shows a schematic side view of a first embodiment of a device for performing the method according to the invention.
Figure 5 shows a schematic bottom view of the device of figure 4.
Figure 6 shows an end view of the device of figure 4 before activation.
Figure 7 shows an end view of the device of figure 4 after activation.
Figure 8 shows a schematic front view of a second embodiment of a device for performing the method according to the invention.

### Detailed description of the embodiments

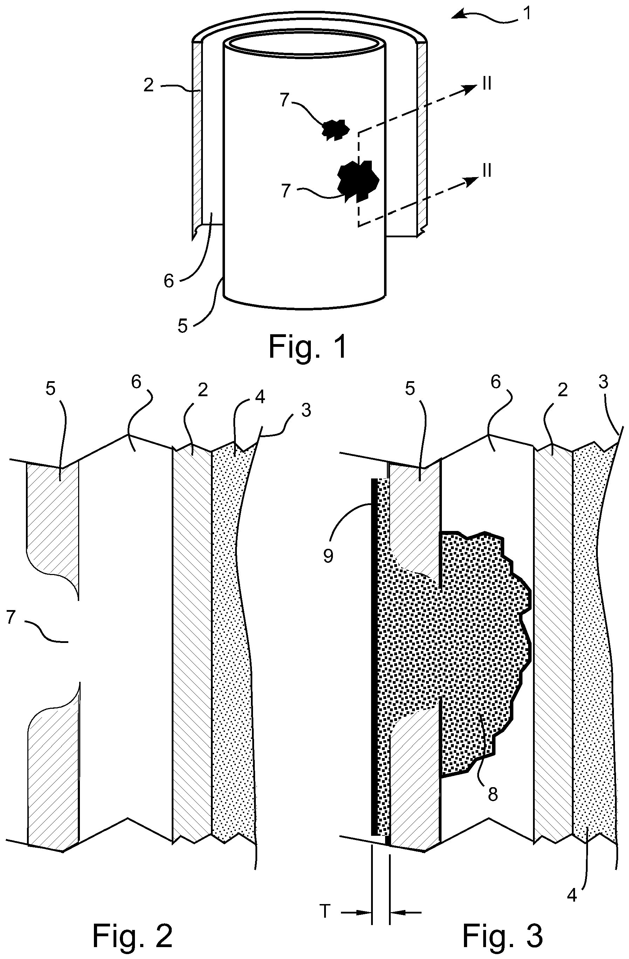

Figure 1 shows a schematic and over simplified view of a typical well installation 1. A typical well installation comprises a casing 2 which is usually permanently installed in a well bore hole 3. The casing 2 is usually secured in place by injecting cement 4 between the outer surface of the casing and the inner surface of the well bore 3. In this way, the casing is permanently secured in the well bore hole.

Production tubing 5 is arranged inside the casing. The production tubing is arranged to be removable, so it is not permanently connected to the bore hole or the casing. An annulus 6 is therefore formed between the outer surface of the production tubing 5 and the inner surface of the casing 2.

The production tubing 5 shown in figure 1 has two holes 7 which go through the side wall of the production tubing. The holes could be due to any number of reasons. Three non limiting examples of causes of holes in production tubing are corrosion, erosion and damage due to tools working inside the production tubing. However, many other reasons exist as will be known to the person skilled in the art.

Figure 2 shows a cross section through one side of the well bore assembly showing one of the two holes through the wall of the production tubing 5. Figure 3 shows the same cross section as shown in figure 2, but after the method according to one embodiment of the current invention has been performed. In this case, epoxy 8 has been injected into the hole such that the epoxy fills the hole. The epoxy also partially fills the annulus 6 between the casing and the production tubing. However, it should be noted that in most cases, the epoxy in the annulus will only fill the volume of the annulus immediately around the hole. Usually, when looking at the epoxy material in the annulus in a direction perpendicular to the axis of the hole, the epoxy material patch will be approximately circular. In other words, the epoxy does not wrap around the entire outer surface of the production tubing. In this way, the fluid flow through the annulus is not blocked by the reparation. It should however be noted that if it is desired to block off the fluid flow through the annulus, then an increased amount of epoxy could be injected through the hole. If enough epoxy is injected into the annulus, the epoxy will eventually form an annular blockage in the annulus thereby preventing fluid flow through the annulus.

As can be seen in the figure, the thickness T of the epoxy layer on the inside of the production tubing is thin and does not present any serious hindrance to flow through the tubing or to tool access to the production tubing below the patch. The layer of epoxy on the inside of the tubing however also functions as a reinforcement of the reparation. The layer of epoxy bonds to the inner surface of the tubing and prevents the plug from pushing out through the hole. In order to further increase the strength of the repair, the epoxy material could be reinforced with fibres or other strength increasing additives.

It should also be mentioned that if enough epoxy is injected so that the epoxy reaches the inner surface of the casing, the epoxy can further support the outer surface of the production tubing in the area of the hole. In this way, the repair not only plugs the hole, but also reinforces the tubing, both from the inside via the thin layer of epoxy and from the outside via the epoxy which pushes against the inner surface of the casing.

In order to prevent the hole sealing device used to inject the epoxy from bonding to the production tubing, a thin foil 9 is arranged between the device and the epoxy. When the epoxy is injected into the hole, the epoxy will fill up the thin space between the inner surface of the tubing and the foil. When the epoxy hardens, the epoxy will bond to the foil. When the device is pulled out of the well, the foil remains in the well, bonded to the repair. In another embodiment, Teflon or another non-stick material such as a mould release agent could be arranged on the outer surface of the device.

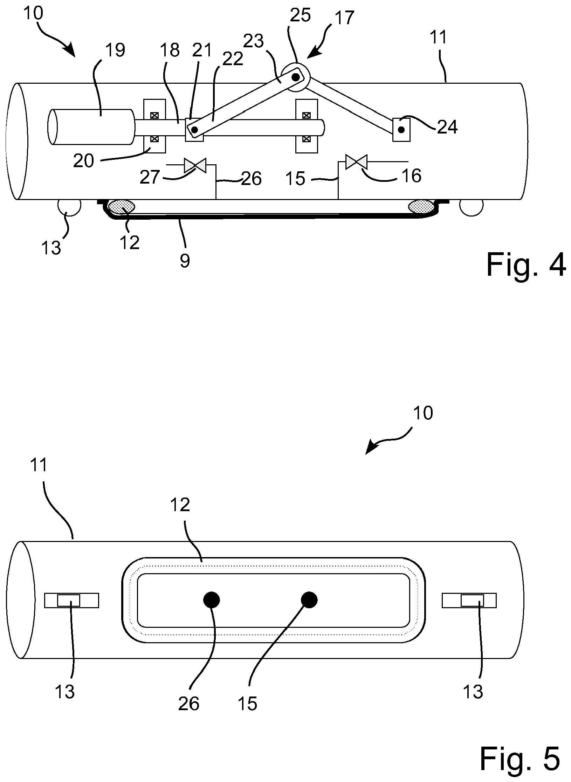

Figures 4-7 show schematic details of a first embodiment 10 of a hole sealing device which is suitable for performing a method which can be used to establish a plug such as the one shown in figure 3.

The hole sealing device 10 comprises a tubular body 11 which has an outer diameter which is smaller than the smallest inner diameter of the production tubing string 5. An elongated semi rectangular seal 12 is arranged on one outer surface of the tubular body. The elongated seal has a longitudinal axis which is arranged parallel to the longitudinal axis of the tubular body. Due to the elongated shape of the seal, it is possible for the device to fill multiple holes within an area defined by the perimeter of the seal. It should however be noted that shapes other than semi rectangular could also be used. An oval seal or a circular seal could also be used. The semi rectangular seal however has the advantage that it has a large area which increases the area which can be repaired in one operation.

The seal could be made in many different ways. One example is as an inflatable bladder having a tubular cross section. The bladder could be filled with a fluid, either a gas or a liquid, or it could be filled with a semi solid material, such as for example foam or an elastic material.

The seal is designed to be compressed when the device is pressed up against the inner surface of the production tubing and thereby create a well defined sealed volume between the inside of the production tubing and the device. Wheels 13 or pads are arranged on the same side of the device as the seal in order to prevent the seal from coming into contact with the inner surface of the production tubing while the device is run into place. The wheels are mounted to the body of the device via springs 14 such that the wheels retract into the body of the device when the device and therefore the seal 12 are pressed against the inner surface of the production tubing. In another embodiment, (not shown) the seal could be retracted into the body of the device when not in use. In this way, wheels or pads are not necessary to protect the seal. One example of this could be an inflatable seal (not shown) which when deflated does not protrude from the body of the device.

The device comprises a fluid injection outlet 15 arranged in the center of the area surrounded by the seal. A valve 16 controls the flow of fluid out of the fluid injection outlet. In the current embodiment, the composition of the epoxy is determined at the surface before the device is put into the well. The epoxy is usually a two component system which is mixed inside the body of the device just before being injected into the hole.

The device could also comprise a sensor (not shown) which is able to scan the inner surface of the production tubing to locate holes in the production tubing. The sensor can be one of many different possible types. The person skilled in the art of sensors will be able to specify a number of different options.

The device can also comprise means 26,27 for pressure testing the hole and the repair. Before injecting the sealant into the hole, it is usually desired to be certain that there is a hole which needs to be filled. If the device is placed incorrectly, then the sealant injected by the device will remain in the production tubing. In addition, after the sealant has been injected, it is desired to test the success of the repair.

In the current embodiment, these means for pressure testing the hole and the repair comprise a second fluid inlet (26) which injects for example N2 gas into the sealed volume. The flow of gas is controlled via a valve 27. The means could also comprise a pressure sensor (not shown) which could measure the pressure development in the sealed volume. If there is a pressure decay in the sealed volume then there is a hole. If the pressure remains constant, then there is no hole. If the pressure is supplied by a motor driven pump, then instead of using a pressure sensor, the pressure could be measured by measuring the amount of current drawn by the motor driving the pump. The test could also be performed by injecting a small amount of gas or fluid into the sealed volume and watching the response in the relevant annulus at the top of the well bore.

The device furthermore comprises a mechanism 17 which is able to press the device and the seal against the inner surface of the production tubing. In the embodiment shown in figures 4-7, the mechanism is arranged on the side of the body which is opposite to the seal. The mechanism comprises a type of mechanical arm which is designed to extend out of the housing and press against the inner surface of the production tubing, thereby pressing the device itself against the inner surface of the production tubing opposite to the mechanism.

The mechanism 17 in this embodiment comprises a threaded rod 18 which is arranged in the body of the device and parallel to the longitudinal axis of the body. A motor 19 is arranged to rotate the threaded rod. Bearings 20 support the threaded rod in the body. A threaded nut 21 is arranged on the threaded rod and is prevented from rotating by a sliding connection (not shown) to the body. The threaded nut therefore moves back and forth along the threaded rod when the rod rotates. One end 22 of a two arm linkage 23 is connected to the threaded nut. The other end 24 of the two arm linkage is fixed to the body. A wheel 25 is arranged at the middle joint of the two arm linkage. When the threaded nut moves back and forth the wheel is therefore forced in and out of the body of the device. The wheel 25 of the mechanism can therefore be pressed against the inner surface of the production tubing by rotating the threaded rod in a first direction. When the wheel 25 presses against the inner surface, the device is forced against the opposite side of the production tubing thereby pressing the seal 12 against the inner surface of the production tubing.

It should be noted that the arm could be formed in many different ways. For example, a hydraulic piston could also be imagined. In addition, it could be imagined that another form of support than a wheel 25 could be used to better spread the force on the inner surface of the pipe. This could be important in pipes which do not have high strength or which are highly corroded.

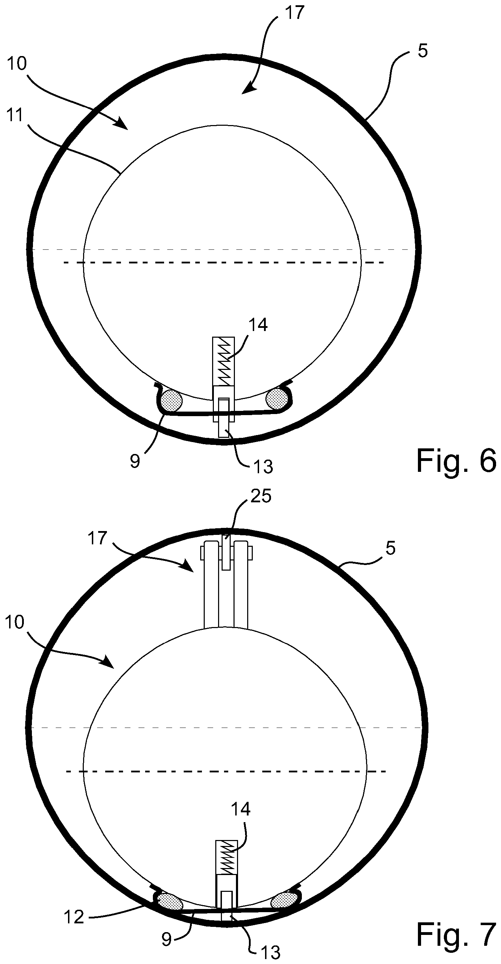

Figures 6 and 7 show how the device moves inside the production tubing when the mechanical arm extends and pushes the seal against the inner surface of the production tubing. Figure 6 shows the device before the arm extends. As can be seen the wheels 13 push against the inside of the production tubing and keep the seal from coming into contact with the production tubing. Figure 7 shows the arm extended and the device displaced out towards the inner surface of the production tubing opposite the arm thereby compressing the seal against the inner surface of the production tubing. In this way, a well defined closed volume is created between the device and the inner surface of the production tubing. This closed volume can then be filled with epoxy under pressure, thereby forcing the epoxy through the hole in the production tubing and out into the annulus between the production tubing and the casing.

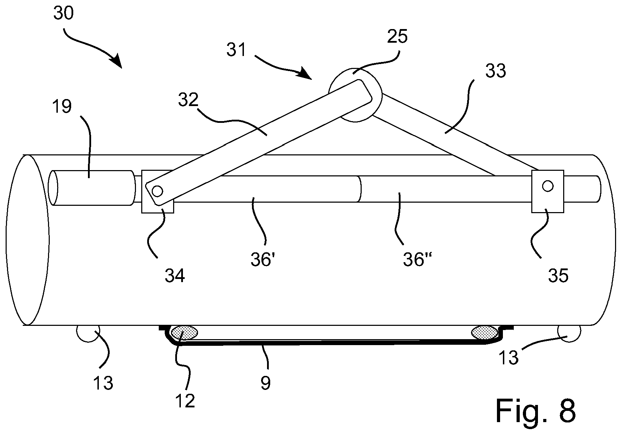

Figure 8 shows a second embodiment 30 of a hole sealing device. The device of figure 8 is in general very similar to the device of figures 4-7 and the same reference numerals will therefore be used to describe the same features. However, the difference lies in the mechanism 31 to press the device against the inner surface of the production tubing. In this case, the mechanism comprises a two arm linkage 32,33, where one end of each arm is connected to a threaded nut 34,35 arranged on opposite ends of a threaded rod 36. The threaded rod is furthermore arranged such that one side 36' of the rod has a thread which is opposite to the other side of the rod 36". In this way, when the threaded rod is rotated by the motor 19, the two threaded nuts will either move towards each other or away from each other depending on the direction of rotation of the threaded rod. As in the previous embodiment, a wheel 25 is mounted to the two arm linkage at the joint between the arms 32,33. When the threaded nuts move towards each other, the wheel 25 is moved out of the housing, thereby pressing the seal 12 against the inner surface of the production tubing. When the threaded nuts move away from each other, the wheel is moved into the body and the seal releases the inner surface.

One embodiment of the method according to the information will now be described.

After establishing the approximate depth of the hole/s, the hole sealing device 10 will be mounted below a manipulation tool (not shown) & run on an electric wireline. The manipulation tool could be of the kind shown in WO 01/38689 A1. While the device is moving through the production tubing string, the spring activated wheels 13 or pads arranged on the device will protect the seal element 12 of the device from wear.

Once the device has reached the appropriate depth, the manipulation tool will anchor & rotate the hole sealing device through 360°. A sensor on the hole sealing device could be used to detect the orientation of the hole 7 in order to allow the hole sealing device to be rotated into the correct orientation. Alternatively, a series of pressure tests could be performed at different orientations. When the seal element 12 of the device is facing the hole, the motor 19 in the hole sealing device will work to deploy a mechanical arm mechanism 17. This will in turn push the device against the wall of the production opposite the mechanical arm, compressing the seal element & 'framing' the hole/s in the tubular.

To test that the tool is accurately positioned over a hole, a leak test can be performed by pumping a small volume of gas or fluid, for example N2, into the hole & observing the pressure response in the enclosed volume framed by the seal and/or at the surface. Once the leak path is confirmed, epoxy resin will be injected through the hole/s in the production tubing with a sufficient volume to touch & bond to the inner wall of the next casing, but with an insufficient volume to completely seal off the annulus between the production tubing and the casing. As mentioned previously, if it is desired to completely seal off the annulus, then an increased amount of epoxy is injected into the hole.

The properties of the resin (setting time, viscosity, density, tri-axial strength etc) of the resin will be tailored to the individual well. A thin foil liner 9 will be employed on the surface of the tool body to prevent the epoxy bonding to the tool.

Once the epoxy repair is in place, the motor will work to retract the mechanical arm mechanism 17 into the body of the tool, allowing the spring activated wheels 13 or pads to protrude and to protect the seat while the device is being pulled out of the production tubing. In the case where a foil 9 had been used, the foil is released from the device and remains in the well bore, bonded to the epoxy repair.

The procedure is repeated until all the holes in the tubing have been repaired. It is to be noted that it is expected that the best procedure is to remove the device from the well between each hole repair. However, it could also be imagined that a device could be built in accordance with the current invention which could fill more than one hole at a time without being removed from the well.

The 2-part epoxy injection system is not described in detail in this specification since a detailed description of the chemistry of the epoxy system is not essential in order to understand the current invention. However, more information on suitable epoxy systems can be found by consulting relevant patent and non-patent literature or by consulting an expert in the field. The advantage of using an epoxy system is due to the fact that the chemistry of epoxy resins allows them to be produced with a very broad range of properties. Properties such as setting time, viscosity, density & tri-axial strength can all be tailored to each specific job. Also, different additives, for example strengthening fibres, could be added to the epoxy in order to optimize its properties.

It should be noted that due to the relatively small size of the resulting epoxy patch between the production tubing and the casing, the patch will not impede removal of the production tubing after the patch is established. However, in certain cases, for example if large holes have been filled or if there a large number of filled holes, the epoxy could impede removal of the tubing. In this case, it is envisaged that the epoxy plug/patch could be removed from the well bore with the application of sufficient heat, which could potentially be necessary as part of the well abandonment. It is imagined that other techniques could also be used to remove the epoxy if this was required.

It is also to be noted that the above description has focused on production tubing as an example of pipe in pipe tubing. The current invention can however also be used together with other forms of pipe in tubing. For example an intermediate casing string,

It is also to be noted that the above description has only focused on epoxy as the sealant material. However, other forms of sealant materials could be used within the context of this specification. For example, many different forms of elastomeric materials could be used, for example phenolic resins and rubber/self vulcanizing rubber. As another example, metal based sealants could also be used, for example molten lead or tin.

It is to be noted that the figures and the above description have shown the example embodiments in a simple and schematic manner. The internal electronic and mechanical details have not been shown since the person skilled in the art should be familiar with these details and they would just unnecessarily complicate this description.

## Claims

1. A method for the in-situ repair of holes (7) in the side wall of well tubulars, such as production tubing (5), said method comprising the following steps:
- running a hole sealing device (10, 30) into the well tubular,
- identifying the hole (7) in the side wall of the well tubular, and
- injecting a sealant material (8) into the hole (7) via the hole sealing device,
**characterized by** pressing the hole sealing device (10, 30) against the inner surface of the well tubular such that a semi-rectangular, oval or circular seal (12) is established around the hole (7) so that the hole is within an area of the inner surface of the well tubular defined by the perimeter of the seal, thereby creating a well-defined sealed volume between the inside of the well tubular and the device, and by injecting the sealant material (8) into the hole via said well-defined sealed volume.

2. A method according to claim 1, **characterized in that** the sealant material (8) used is a two component epoxy.

3. A method according to claim 1 or 2, **characterized in that** the method further comprises the step of rotating the hole sealing device (10, 30) in the well tubular until a sealant material injecting nozzle (15) of the hole sealing device faces the hole (7) in the well tubular.

4. A method according to any one of claims 1-3, **characterized in that** the step of injecting a sealant material (8) into the hole (7) injects enough sealant material to partially fill an annulus (6) between the well tubular and a casing (2) into which the well tubular has been inserted.

5. A method according to any one of claims 1-4, **characterized in that** a thin foil or a non-stick material (9) is arranged between the inner surface of the well tubular and the device (10, 30) before the sealant material (8) is injected into the hole (7).

6. A hole sealing device (10, 30) for the in-situ repair of holes (7) in the side wall of well tubulars, such as production tubing (5), said device comprising a tubular body (11) which has an outer diameter which is smaller than the smallest inner diameter of the well tubulars to be repaired, and said device comprising a fluid injection outlet (15) for injecting a sealant material (8) into a hole (7) in the side wall of the well tubular, **characterized in that** a semi rectangular, oval or circular seal (12) is arranged on the outer surface of the tubular body (11) around said fluid injection outlet (15) to establish a seal around an area of the inner surface of the well tubular defined by the perimeter of the seal when the device (10, 30) is pressed against the inner surface of the well tubular.

7. A hole sealing device (10, 30) according to claim 6, **characterized in that** the seal (12) is elongated and has a longitudinal axis which is parallel with the longitudinal axis of the well tubular.

8. A hole sealing device (10, 30) according to claim 6 or 7, **characterized in that** the device comprises means for holding a foil (9) between the sealant (8) and the device, such that sealant does not fasten the device to the inner surface of the well tubular.

9. A hole sealing device (10, 30) according to any one of the claims 6 to 8, **characterized in that** the device comprises a mechanism with a mechanical arm (17; 31) which is arranged to press the device against the inner surface of the well tubular opposite the mechanical arm.

10. A hole sealing device (10, 30) according to claim 9, **characterized in that** the mechanism comprises a threaded rod (18, 36), a threaded nut (21, 34, 35) arranged on the threaded rod and an arm (22, 32, 33) attached to the threaded nut, where rotation of the threaded rod causes the arm attached to the threaded nut to extend from the housing.

## Patentansprüche

1. Verfahren zur In-Situ-Reparatur von Löchern (7) in der Seitenwand von Brunnenrohren wie etwa einem Produktionsrohr (5), welches Verfahren die folgenden Schritte umfasst:
- Einfahren einer Loch-Abdichtungsvorrichtung (10, 30) in das Brunnenrohr,
- Identifizieren des Lochs (7) in der Seitenwand des Brunnenrohrs und
- Injizieren eines Abdichtmaterials (8) in das Loch (7) über die Loch-Abdichtungsvorrichtung,
**dadurch gekennzeichnet, dass** die Loch-Abdichtungsvorrichtung (10, 30) gegen die Innenfläche des Brunnenrohrs gedrückt wird, so dass eine semi-rechteckige, ovale oder kreisförmige Abdichtung (12) um das Loch (7) herum gebildet wird, so dass sich das Loch in einem Bereich der Innenfläche des durch den Umfang der Abdichtung definierten Brunnenrohrs befindet, wodurch ein wohldefiniertes abgedichtetes Volumen zwischen dem Inneren des Brunnenrohrs und der Vorrichtung hergestellt wird, und dass das Abdichtmaterial (8) über das wohldefinierte abgedichtete Volumen in das Loch injiziert wird.

2. Verfahren nach Anspruch 1, **dadurch gekennzeichnet, dass** das verwendete Abdichtmaterial (8) ein Zweikomponentenepoxid ist.

3. Verfahren nach Anspruch 1 oder 2, **dadurch gekennzeichnet, dass** das Verfahren ferner den Schritt des Drehens der Loch-Abdichtungsvorrichtung (10, 30) in dem Brunnenrohr umfasst, bis eine Abdichtmaterial-Injektionsdüse (15) der Loch-Abdichtungsvorrichtung dem Loch (7) in dem Brunnenrohr zuwendet.

4. Verfahren nach einem der Ansprüche 1 bis 3, **dadurch gekennzeichnet, dass** der Schritt des Injizierens eines Abdichtmaterials (8) in das Loch (7) ausreichendes Abdichtmaterial injiziert, um teilweise einen Ringraum (6) zwischen dem Brunnenrohr und einem Mantel (2), in den das Brunnenrohr eingesetzt worden ist, zu füllen.

5. Verfahren nach einem der Ansprüche 1 bis 4, **dadurch gekennzeichnet, dass** eine dünne Folie oder ein nicht klebendes Material (9) zwischen der Innenfläche des Brunnenrohrs und der Vorrichtung (10, 30) angeordnet wird, bevor das Abdichtmaterial (8) in das Loch (7) injiziert wird.

6. Loch-Abdichtungsvorrichtung (10, 30) für die In-Situ-Reparatur von Löchern (7) in der Seitenwand von Brunnenrohren wie etwa einem Produktionsrohr (5), wobei die Vorrichtung einen rohrförmigen Körper (11) umfasst, welcher einen Außendurchmesser aufweist, der kleiner als der kleinste Innendurchmesser der zu reparierenden Brunnenrohre ist, und die Vorrichtung eine Fluidinjektions-Auslassöffnung (15) zum Injizieren eines Abdichtmaterials (8) in ein Loch (7) in der Seitenwand des Brunnenrohrs umfasst, **dadurch gekennzeichnet, dass** eine semi-rechteckige, ovale oder kreisförmige Abdichtung (12) auf der Außenfläche des rohrförmigen Körpers (11) um die Fluidinjektions-Auslassöffnung (15) angeordnet ist, um eine Abdichtung um einen Bereich der Innenfläche des durch den Umfang der Abdichtung definierten Brunnenrohrs herzustellen, wenn die Vorrichtung (10, 30) gegen die Innenfläche des Brunnenrohrs gedrückt wird.

7. Loch-Abdichtungsvorrichtung (10, 30) nach Anspruch 6, **dadurch gekennzeichnet, dass** die Abdichtung (12) länglich ist und eine Längsachse aufweist, die zur Längsachse des Brunnenrohrs parallel ist.

8. Loch-Abdichtungsvorrichtung (10, 30) nach Anspruch 6 oder 7, **dadurch gekennzeichnet, dass** die Vorrichtung Mittel zum Halten einer Folie (9) zwischen dem Abdichtmaterial (8) und der Vorrichtung umfasst, so dass das Abdichtmaterial die Vorrichtung an der Innenfläche des Brunnenrohrs nicht festsetzt.

9. Loch-Abdichtungsvorrichtung (10, 30) nach einem der Ansprüche 6 bis 8, **dadurch gekennzeichnet, dass** die Vorrichtung einen Mechanismus mit einem mechanischen Arm (17; 31) umfasst, der zum Drücken der Vorrichtung gegen die Innenfläche des Brunnenrohrs, dem mechanischen Arm entgegengesetzt, ausgelegt ist.

10. Loch-Abdichtungsvorrichtung (10, 30) nach Anspruch 9, **dadurch gekennzeichnet, dass** der Mechanismus eine Gewindestange (18, 36), eine auf der Gewindestange angeordnete Gewindemutter (21, 34, 35) und einen an der Gewindemutter befestigten Arm (22, 32, 33) umfasst, wobei die Drehung der Gewindestange dazu führt, dass der an der Gewindemutter befestigte Arm sich vom Gehäuse erstreckt.

## Revendications

1. Procédé de réparation in situ de trous (7) dans la paroi latérale de tubulures de puits, tel qu'une tubulure de production (5), ledit procédé comprenant les étapes consistant à :
- faire passer un dispositif d'étanchéité de trou (10, 30) dans la tubulure de puits,
- identifier le trou (7) dans la paroi latérale de la tubulure de puits, et
- injecter un matériau d'étanchéité (8) dans le trou (7) par l'intermédiaire du dispositif d'étanchéité de trou,
**caractérisé par** le pressage du dispositif d'étanchéité de trou (10, 30) contre la surface intérieure de la tubulure de puits si bien qu'un joint semi-rectangulaire, ovale ou circulaire (12) est établi autour du trou (7) si bien que le trou se trouve dans une zone de la surface intérieure de la tubulure de puits définie par le périmètre du joint, créant ainsi un volume scellé et bien défini entre l'intérieur de la tubulure de puits et le dispositif, et par l'injection d'un matériau d'étanchéité (8) dans le trou par l'intermédiaire dudit volume scellé et bien défini.

2. Procédé selon la revendication 1, **caractérisé en ce que** le matériau d'étanchéité (8) utilisé est un époxy à deux composants.

3. Procédé selon la revendication 1 ou 2, **caractérisé en ce que** le procédé comprend en outre l'étape consistant à faire tourner le dispositif d'étanchéité de trou (10, 30) dans la tubulure de puits jusqu'à ce qu'une buse d'injection de matière d'étanchéité (15) du dispositif d'étanchéité de trou fasse face au trou (7) dans la tubulure de puits.

4. Procédé selon l'une quelconque des revendications 1 à 3, **caractérisé en ce que** l'étape d'injection d'un matériau d'étanchéité (8) dans le trou (7) injecte suffisamment de matériau d'étanchéité pour remplir partiellement un espace annulaire (6) entre la tubulure de puits et un boîtier (2) dans lequel la tubulure de puits a été insérée.

5. Procédé selon l'une quelconque des revendications 1 à 4, **caractérisé en ce qu'**une feuille mince ou un matériau antiadhésif (9) est disposé entre la surface intérieure de la tubulure de puits et le dispositif (10, 30) avant que le matériau d'étanchéité (8) ne soit injecté dans le trou (7).

6. Dispositif d'étanchéité de trou (10, 30) pour la réparation in situ de trous (7) dans la paroi latérale de tubulures de puits, tel qu'une tubulure de production (5), ledit dispositif comprenant un corps tubulaire (11) qui présente un diamètre extérieur qui est inférieur au diamètre intérieure le plus petit des tubulures de puits à réparer, et ledit dispositif comprenant une sortie d'injection de fluide (15) pour injecter un matériau d'étanchéité (8) dans le trou (7) dans la paroi latérale de tubulures de puits, **caractérisé en ce qu'**un joint semi-rectangulaire, ovale ou circulaire (12) est agencé sur la surface extérieure du corps tubulaire (11) autour de ladite sortie d'injection de fluide (15) pour établir un joint autour d'une zone de la surface intérieure de la tubulure de puits définie par le périmètre du joint lorsque le dispositif (10, 30) est pressé contre la surface intérieure de la tubulure de puits.

7. Dispositif d'étanchéité de trou (10, 30) selon la revendication 6, **caractérisé en ce que** le joint (12) est allongé et présente un axe longitudinal qui est parallèle à l'axe longitudinal de la tubulure de puits.

8. Dispositif d'étanchéité de trou (10, 30) selon la revendication 6 ou 7, **caractérisé en ce que** le dispositif comprend des moyens pour maintenir une feuille (9) entre le matériau d'étanchéité (8) et le dispositif si bien que le matériau d'étanchéité ne fixe pas le dispositif à la surface intérieure de la tubulure de puits.

9. Dispositif d'étanchéité de trou (10, 30) selon l'une quelconque des revendications 6 à 8, **caractérisé en ce que** le dispositif comprend un mécanisme avec un bras mécanique (17; 31) qui est agencé pour presser le dispositif contre la surface intérieure de la tubulure de puits en face du bras mécanique.

10. Dispositif d'étanchéité de trou (10, 30) selon la revendication 9, **caractérisé en ce que** le mécanisme comprend une tige filetée (18, 36), un écrou fileté (21, 34, 35) agencé sur la tige filetée et un bras (22, 32, 33) attaché à l'écrou fileté, où la rotation de la tige filetée fait que le bras attaché à l'écrou fileté s'étend à partir du boîtier.
